# EUROPEAN PATENT APPLICATION

(11) **EP 1 855 244 A1**
(43) Date of publication of application: **14.11.2007**
(21) Application number: 06728615.3
(22) Date of filing: 03.03.2006
(51) Int. Cl.: G06Q 20/00, G06Q 10/00, H04B 7/26

(54) **VALUE INFORMATION OUTPUT METHOD AND MOBILE COMMUNICATION TERMINAL APPARATUS**

(30) Priority: 04.03.2005 JP 2005060021
(71) Applicant: Vodafone K.K., Tokyo 105-6205 (JP)
(72) Inventor: FUKAYA, Masato, 1056205 (JP); TAMURA, Ryota, 1056205 (JP); MATSUDA, Aiko, 1056205 (JP)
(74) Representative: Grünecker, Kinkeldey, Stockmair & Schwanhäusser Anwaltssozietät
(86) International application number: PCT/JP2006/304136
(87) International publication number: WO 2006/093284

(57) **Abstract**

The user of a mobile communication terminal uses a valuta management application 31 to manage value information, and sets a threshold value to a valuta display control unit 32. Thereafter, when the user performs deduction of "valuta", the valuta display control unit 32 makes a decision as to whether or not the valuta balance is less than or equal to the threshold value. If this decision is affirmative, then a display device 13, along with performing a display to the effect that the valuta balance has become less than or equal to the threshold value, also performs a display urging the purchase of "valuta", and the user performs additional purchase of "valuta" according to this display. Accordingly, it is possible for the user to confirm that the "valuta" which is stored is within a predetermined range, so that the convenience is enhanced.

## Description

### Technical Field

The present invention relates to a value information output method and to a mobile communication terminal, and, in more detail, relates to a value information output method for a mobile communication terminal device which is endowed with a function of performing transactions using stored value information, and to a mobile communication terminal which employs this method.

### Background Art

From the past, mobile communication terminals such as portable telephones have become widespread. Enhancement of the functions and the performance of such mobile communication terminals has been remarkable, and, in addition to the conversation function, which is their essential function as mobile communication terminals, and the function of transceiving e-mail, devices which are endowed with various ancillary functions are making their appearance. As one example of such an ancillary function, a mobile communication device which is endowed with a prepaid type voucher function of being used as electronic money has recently been implemented in practice (refer to Patent Document #1, and so forth).

Furthermore, a mobile communication terminal has also been implemented in practice (refer to Patent Document #2, and so forth), which is equipped with a function of so-called point service, with points which can be acquired not only by prepaid type vouchers, but also during the purchase of goods or the utilization of services, and which can be assigned as all or a part of the payment during the purchase of goods or the utilization of services.

Moreover if the case of, for example, electronic money is considered, with a mobile communication terminal which is endowed with this prepaid voucher type function, not only is it possible to utilize electronic money for the purchase of goods or services, but it is also possible, when settling the electronic money account, to add electronic money which has been purchased to the electronic money carried by the mobile communication terminal, along with charging the required amount of money to the value card of the user by wireless communication via a mobile communication network (refer to Non-Patent Document #1, and so forth.).

Patent Document #1: Japanese Laid-Open Patent Publication 2004-70866.
Patent Document #2: Japanese Laid-Open Patent Publication 2004-227416.
Non-Patent Document #1: "Edycharge (inpayment", [online], Bitwaret KK, 4 February 2006; URL:
   http://www.edy.jp/edy_mobile/edy_mobile_03.html

### Disclosure of Invention

### Problems to be solved by the Invention

As described above, with a mobile communication terminal, the function of conducting transactions with value information such as electronic money or a points system may be utilized for enhancing the convenience to the user. However, with such functions, for output to the user of necessary information such as, for example, whether the balance of electronic money is sufficient, or whether points have been built up or the like, it has been necessary for the user to perform actuation of the mobile communication terminal on his own initiative or the like, which is not adequate.

The present invention has been conceived in consideration of the above described circumstances, and its object is to provide a value information output method which can confirm that the value information upon a mobile communication terminal is within a predetermined range, thus enhancing the convenience to the user, and to provide a mobile communication terminal which utilizes this method.

### Means for Solving Problem

The value information output method of the present invention is a value information output method for a mobile communication terminal which is endowed with a function of performing a transaction using stored value information, and includes: a value information transaction process of performing a transaction accompanied by change of said value information; and a value information output process of, if in said value information transaction process it has transpired that the content of said value information has become within a predetermined range, performing output upon an output device of said mobile communication terminal to the effect that said value information is within said predetermined range.

With this value information output method, first, in the position information transaction process, a transaction is performed accompanied by a change of the value information. In this case, by "value information" is meant information which can be transacted for some goods or service. For example, it may mean balance information, in the case of so called electronic money or a prepaid type voucher or the like. Furthermore, in the case of a so-called points service, it may mean information about points which can be acquired when purchasing goods or utilizing services, and which can be allocated for all or a part of the payment when purchasing goods or utilizing services.

Accordingly, the term "transaction accompanied by a change of the value information" includes the case in which electronic money is used, and this is accompanied by a decrease in the stored value, as in a transaction in which goods are purchased; and it also includes the case when, upon a transaction, this is accompanied by an increase in the stored value, as with points in a point service. Furthermore, the term "transaction" is meant to include, not only the case of performing non contact type communication with proximity type wireless communication, as represented by the function of an IC card, but also a transaction which is performed in relation to the value information which is stored within the mobile communication device by utilizing some other communication function.

Next, in the value information output process, if it has been found that the content of the value information is within the predetermined range, then an output is made upon the output device of the mobile communication terminal to the effect that the value information is within the predetermined range. In this case, in the case that the value information is given as a numerical value, the "predetermined range", apart from meaning an expression such as "is greater than or equal to some value and moreover is less than or equal to some value", is also intended to include simply an expression such as "is less than or equal to some value". Furthermore "output" not only means output via a display device such as a liquid crystal screen or the like, but also includes other types of output, such as optical output via an LED or the like, or output via a sound or via vibration or the like.

Thus, according to this value information output method, the user of the mobile communication terminal is able to confirm that the value information which is stored is within the predetermined range, so that it is possible to enhance the convenience to the user.

Furthermore, with the value information output method of the present invention, there may be further included, before said value information transaction process, a value information range setting process of setting said predetermined range. In this case it is possible further to enhance the convenience, since the user or the like is able to set the predetermined range which is required by the user or the like.

Moreover, with the value information output method of the present invention, said value information may be expressed by a numerical value, and said predetermined range may be "less than or equal to a predetermined numerical value". In this case, when for example the value information is electronic money or a prepaid type voucher, since it is possible to perform output when the balance becomes less than or equal to a predetermined value, i.e. has become low, accordingly the user is able to have the chance of purchasing additional electronic money or the like, so that the convenience can be enhanced.

Yet further, with the value information output method of the present invention, said output device may be a display device of said mobile communication terminal. According to the information which is displayed upon this display device, the user of the mobile communication terminal is able easily to recognize that the value information is within the predetermined range.

Still further, with the value information output method of the present invention, in said value information output process, output may be further performed urging the user to change the content of said value information; and there may be further comprised a value information content change process of performing processing to change the content of said value information if, according to said output urging the content of said value information to be changed, a command has been inputted for such a change. In this case "urging the content of said value information to be changed" is intended to include outputting a query as to whether or not to make a change to the content of the value information.

In this case, in the value information output process, if for example the value information is balance information for electronic money, not only a display to the effect that the balance is within the predetermined range is provided, but also a display is provided asking whether or not an additional purchase of electronic money is to be made. Moreover, if a command is issued for such an additional purchase, in the value information content change process, an additional purchase of electronic money is performed, and processing is performed to add this additional purchase to the balance. Accordingly, if the value information is within the predetermined range, when the user of the mobile communication terminal wishes to make a change to this value information, he is able to make such a change to the value information without being required to perform any complicated operation.

Thus, it is possible to perform said value information content change process using wireless communication via the mobile communication network. Accordingly, if the value information is within the predetermined range, the user of the mobile communication terminal is able to make a change to the value information upon the spot, if he wants to make a change to this value information.

The mobile communication terminal of the present invention is a mobile communication terminal, comprising: a value information transaction function means which performs a transaction accompanied by change of stored value information; and a value information output means which, if it has transpired that the content of said value information has become within a predetermined range, performs output upon an output device of said mobile communication terminal to the effect that said value information is within said predetermined range. In this case, the meanings of "value information", "transaction accompanied by change of value information", "transaction", "predetermined range", and "output" are the same as the meanings in connection with the value information output method previously described. Thus, with this mobile communication terminal, the user is able to confirm that the stored value information is within the predetermined range, so that it is possible to enhance the convenience to the user.

Furthermore, with the mobile communication terminal of the present invention, the value information output means may further perform output urging the user to change the content of said value information; and there may be further included a value information content change means which performs processing to change the content of said value information. In this case "urging the user to change the content of the value information" means the same as the meaning in connection with the value information output method previously described. Accordingly, the user of this mobile communication terminal, if the value information is within the predetermined range, when he wishes to make a change to this value information, is able thus to make a change to the value information without any complicated actuation being required.

Moreover, with the mobile communication terminal of the present invention, said value information transaction function means may be endowed with the function of an IC card for performing non contact type communication, i.e. proximity type wireless communication, and said transaction accompanied by change of said value information may be performed by said non contact type communication. In this case "non contact type communication" means a proximity wireless communication function such as one which is implemented in a railway ticket examination system or the like as a function of a so-called IC card, and does not include infrared ray communication or the like. Accordingly, in this case, it is possible to utilize the confirmation that the value information is within the predetermined range for an electronic money system or a points system which is implemented by the function of an IC card of a mobile communication terminal, so that it is possible to enhance the convenience to the user.

### Effect of the Invention

As explained above, according to the value information output method and the mobile communication terminal of the present invention, the beneficial effect is obtained that the user of a mobile communication terminal can confirm that the value information which is stored is within a predetermined range, so that it is possible to enhance the convenience to the user.

### Brief Description of Drawings

Fig. 1 is a schematic figure showing a system 100 including a mobile communication terminal which is an embodiment of the present invention;
Fig. 2A is an elevation view, schematically showing the external appearance of a portable telephone 10 of Fig. 1;
Fig. 2B is a rear view, schematically showing the external appearance of the portable telephone 10 of Fig. 1;
Fig. 3 is a figure schematically showing an interior system 11 of the portable telephone 10 of Fig. 1;
Fig. 4 is a diagram showing a sequence when the portable telephone 10 of Fig. 1 sets a valuta threshold value and deducts valuta;
Fig. 5 is a figure showing screens which are displayed when setting the valuta threshold value in the sequence diagram of Fig. 4;
Fig. 6 is a flow chart showing the processing of a valuta check S 10 of the sequence figure of Fig. 4;
Fig. 7 is a figure showing a screen which is displayed during the sequence figure of Fig. 4, when the valuta balance is less than or equal to the valuta threshold value;
Fig. 8 is a figure showing screens which are displayed when making an additional purchase of "valuta" in the sequence diagram of Fig. 4;
Fig. 9A relates to a variant embodiment of the present invention, and is an elevation view showing a variant case in which an IC card function is provided by inserting a removable card; and
Fig. 9B relates to this variant embodiment of the present invention, and is a rear view showing this variant case in which the IC card function is provided by inserting a removable card.

### Best Mode for carrying out the Invention

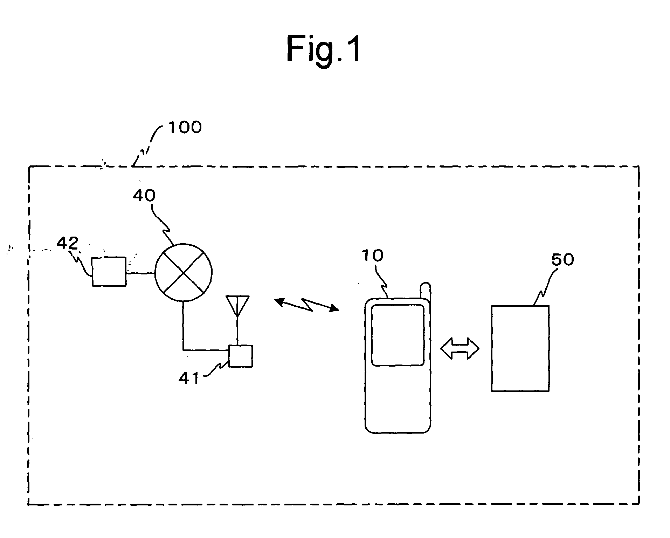

In the following, an embodiment of the present invention will be explained with reference to Figs. 1 through 8. It should be understood that, in these figures, the same reference symbols are affixed to the same or equivalent elements, and overlapped explanation is curtailed.

In Fig. 1, the structure of a system 100 including a mobile communication terminal which is an embodiment of the present invention is schematically shown. As shown in Fig. 1, this system 100 comprises (a) a portable telephone 10, which is a mobile communication terminal; (b) a reader-writer 50 which performs non-contact type communication, i.e. proximity type wireless communication, with the portable telephone 10; (c) a base station 41, which is a part of a mobile communication network, and which performs direct wireless communication in order for the portable telephone 10 to connect to a mobile communication network; (d) a network 40 which includes a mobile communication network; and (e) a valuta server 42, connected to the network 40, which is a server which manages settlement and so on when adding "valuta", which is value information stored within the portable telephone 10. In this case, "valuta" is an item of electronic data specifying a balance by a prepaid type voucher which can be exchanged for goods or the like, and the magnitude of the value thereof is expressed by the magnitude of the numerical value of this electronic data item.

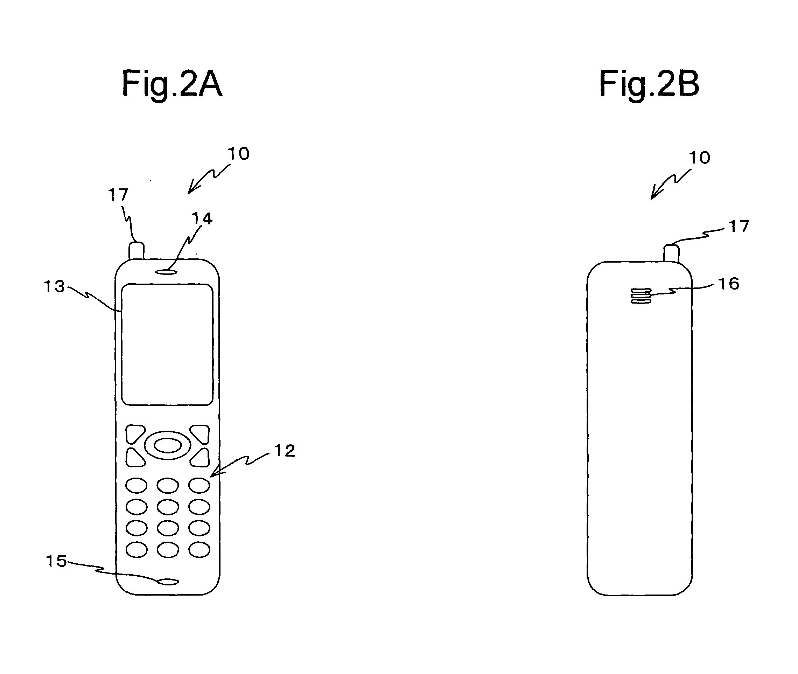

In Fig. 2, the external appearance of this portable telephone 10 is schematically shown. As shown in Fig. 2, this portable telephone 10 comprises (i) an actuation unit 12 comprising a numerical key pad for inputting telephone numbers, and keys for commanding purchase of "valuta" and the like; (ii) a display device 13 comprising a liquid crystal display device which displays actuation guidance for the portable telephone 10, and its operational state; (iii) a speaker for conversation 14 which replays voice signals which have arrived from the other party to communication during telephone conversation; (iv) a microphone 15 for inputting sound during recording and for inputting voice during telephone conversation; (v) a speaker for guidance 16 for generating ring tones and guidance sounds; and (vi) an antenna 17 for performing wireless communication with the base station 41.

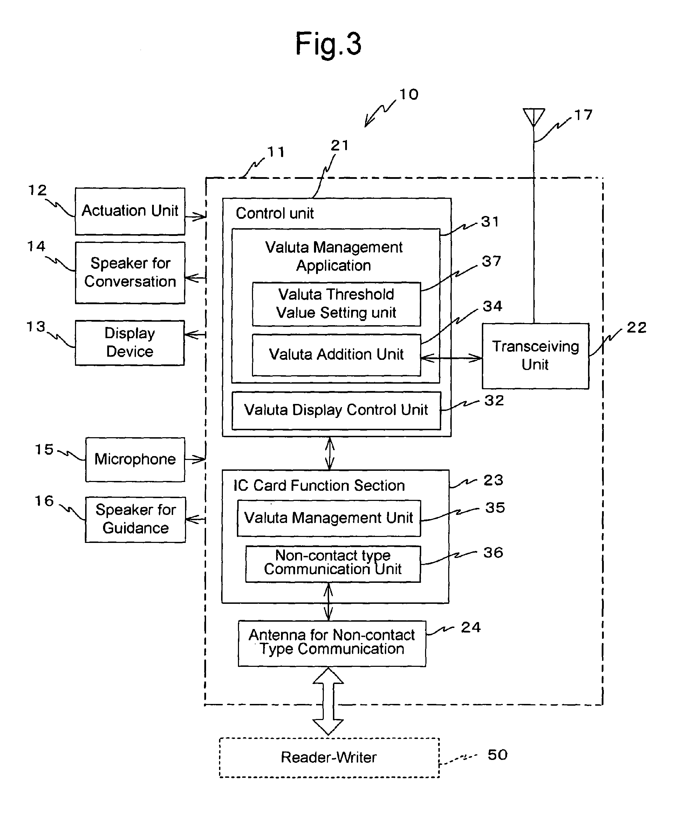

In Fig. 3, the interior system 11 of the portable telephone 10 of Fig. 1 is schematically shown. This interior system 11 comprises (a) a control unit 21 which performs unified control of the system of the portable telephone 10 as a whole; (b) a transceiving unit 22 which performs wireless communication with the base station 41 via the antenna 17; (c) an IC card function section 23 which is endowed with a function of valuta deduction and the like by performing non contact type communication with the reader-writer 50; and (d) an antenna for non contact type communication 24 for the IC card function section 23 to perform non contact type communication. In this embodiment, the IC card function section 23 is of a type in which no contact points for communication are present upon its surface; rather, it performs non contact type communication by exchange of radio wave signals with an opposite party for communication, such as a reader-writer or the like. Operating electrical power is generated by this IC card function section 23, by utilizing electromagnetic induction set up by the radio waves from the other party to communication which are received by the antenna for non contact type communication 24.

In this embodiment, the control unit 21 comprises (i) a valuta management application 31 which communicates with the IC card function section 23, and performs management of the "valuta" within the portable telephone 10; and (ii) a valuta display control unit 32 which stores a valuta threshold value, which is a boundary value which indicates whether or not the "valuta" is low for providing a display to the effect that the valuta balance is low, and which performs checking as to whether or not the "valuta" is less than or equal to this valuta threshold value, and which, if indeed the "valuta" is less than or equal to the valuta threshold value, executes a command to provide a display to the effect that the valuta balance is low. In this embodiment, the valuta management application 31 comprises a valuta threshold value setting unit 37 which sets a threshold value for the valuta, and a valuta addition unit 34 which performs communication via the transmission and reception unit 22, the antenna 17, the base station 41, and the network 40, for adding valuta to the valuta server 42.

Furthermore, the IC card function section 23 comprises a valuta management unit 35 which, along with storing "valuta", and along with appending and using "valuta", also performs addition and subtraction of "valuta", and a non contact type communication unit 36 which performs control of non contact type communication with the reader-writer 50 via the antenna for non contact type communication 24.

Moreover, the control unit 21 comprises hardware not shown in the drawings, such as a central processing device (CPU) and a digital signal processing device (DSP) and a storage device (RAM or the like) and so on, and software which is executed by this central processing device (CPU).

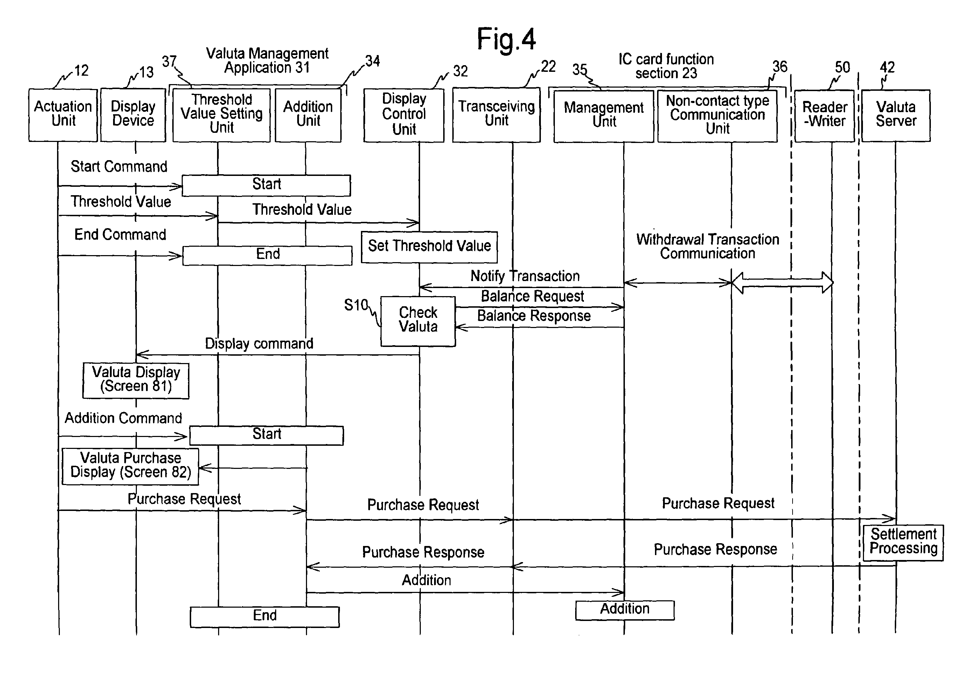

Next, the value information output method of the portable telephone 10 having the above described structure will be explained. In Fig. 4, the sequence of operation by the portable telephone 10 is explained, from the setting of a valuta threshold value to the performance of processing by deduction of valuta.

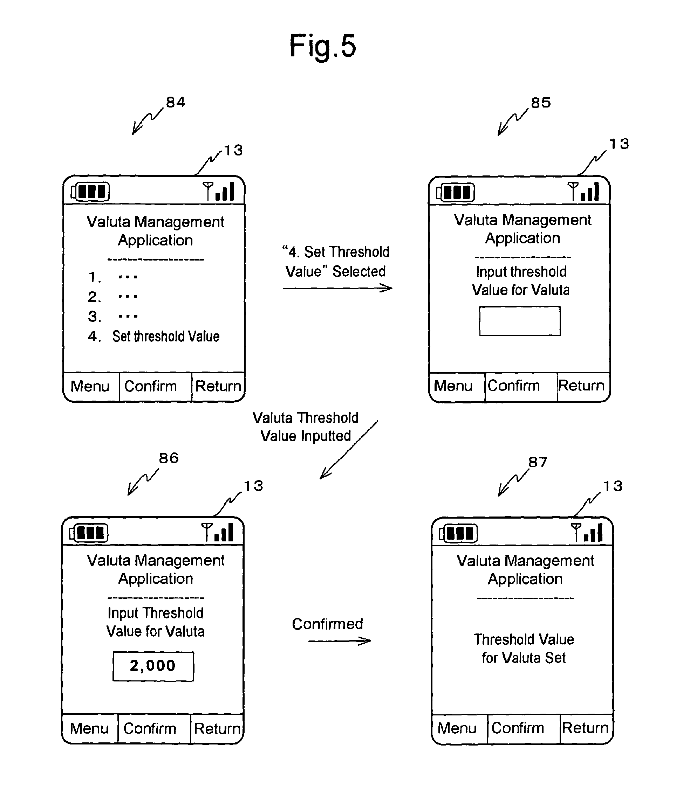

First, when the user of the portable telephone 10 actuates the actuation unit 12 and starts the valuta management application 31, a screen 84 as shown at the upper left of Fig. 5 is displayed upon the display device 13. When the user selects "4. Set threshold value" upon this screen 84, a screen 85 for input of the valuta threshold value is displayed. If the user wishes to set "2,000" here as the valuta threshold value, he inputs "2,000" as shown in the screen 86. Finally, when the user performs confirmation actuation, as shown in Fig. 4, the valuta threshold value is set into the valuta display control unit 32, and the screen 87 of Fig. 5 is displayed upon the display device 13. Returning to Fig. 4, when the user has finished setting the valuta threshold value, the valuta management application 31 terminates.

In this embodiment, it will be supposed that a "valuta" of "2,400" is stored in the valuta management unit 35 of the portable telephone 10. In order for the user of this portable telephone 10 subsequently to purchase goods of a "valuta" of "800", when he approaches the portable telephone 10 to the reader-writer 50, the IC card function section 23 performs communication with the reader-writer 50 via the antenna for non contact type communication 24 for deducting from the valuta. When this transaction communication for deduction has been completed, the fact that a "valuta" transaction has taken place is notified from the valuta management unit 35 to the valuta display control unit 32.

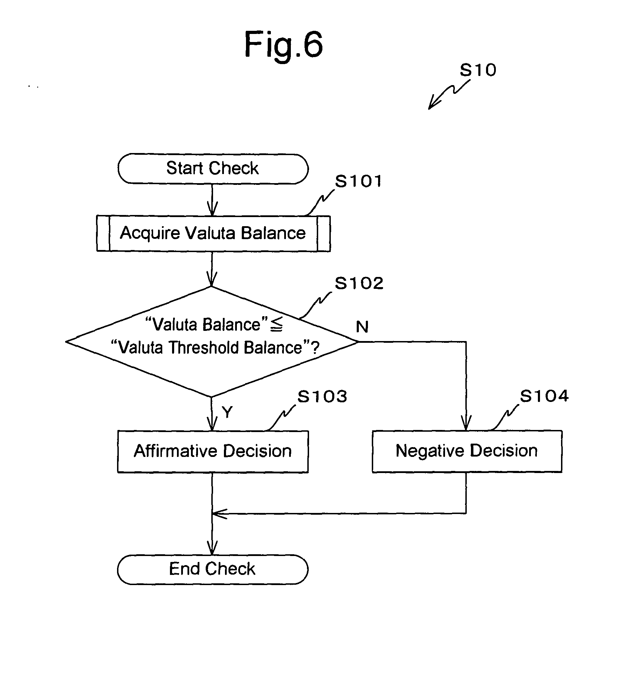

Upon notification that a valuta transaction has taken place, the valuta display control unit 32 starts the processing of the valuta check S10. As shown in Fig 6, in this processing of the valuta check S10, first, in a step S101, the valuta display control unit 32 makes a request for the valuta balance to the valuta management unit 35, and acquires the valuta balance. Next, having acquired the valuta balance, in a step S102, the valuta display control unit 32 performs a comparison as to whether or not this valuta balance is less than or equal to the valuta threshold value. In this embodiment, if the valuta balance is less than or equal to the valuta threshold value, then in a step S103 an affirmative decision is reached, and the valuta check S 10 terminates.

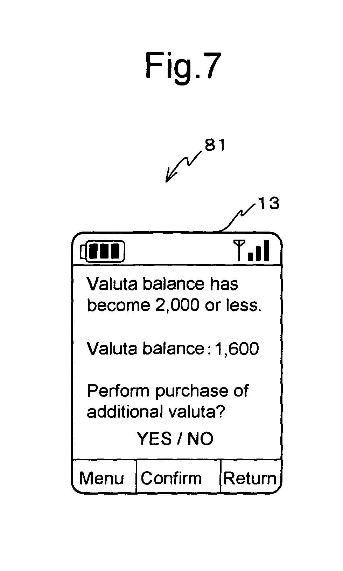

On the other hand, if the valuta balance is a value which exceeds the valuta threshold value, then a negative decision is reached, and the valuta check S 10 terminates. If the decision of the processing of the valuta check S10 is affirmative, then the flow of control returns to Fig. 4, and commands are issued to display the fact that the valuta balance has becomes less than or equal to the valuta threshold value, and to display the valuta balance and a query as to whether or not to make an additional purchase of "valuta"; and the display device 13 performs display to this effect. The situation of this display is shown in the screen 81 of Fig. 7.

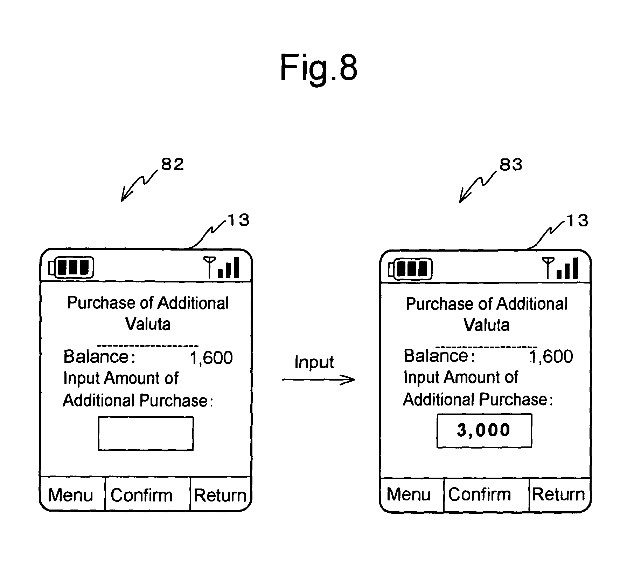

Returning to Fig. 4, when, upon the screen 81, the user actuates the actuation unit 12 and commands the purchase of additional "valuta", then the valuta management application 31 starts, and, as shown in Fig. 8, a screen 82 is displayed for input of the amount of "valuta" to be purchased. In this embodiment, if the user intends to purchase "valuta" to the amount of "3,000", then, on this screen 82, he inputs "3,000" as the amount to be purchased via the actuation unit 12, and requests this purchase. The situation after this input is shown in the screen 83 of Fig. 8. Returning to Fig. 4, upon receipt of this valuta purchase request, the valuta addition unit 34 of the management application 31 starts communication with the valuta server 42 for adding to the valuta, via the transmission and reception unit 22 or the like.

When the settlement processing for this valuta purchase has been completed, the valuta server 42 notifies the valuta addition unit 34 to this effect, via the transceiving unit 22. Upon notification to the effect that the valuta purchase has been completed, the valuta addition unit 34 commands the valuta management unit 35 of the IC card function section 23 to add to the valuta, and the valuta management unit 35 adds "3,000" to the "valuta", so that the "valuta" becomes "4,600" in total. Having confirmed that the valuta has been added, the valuta addition unit 34 terminates the valuta management application 31.

As has been explained above, in this embodiment, first, the user uses the valuta management application 31 and sets the valuta threshold value in the valuta display control unit 32. Thereafter, when the user has made a deduction from the "valuta", the valuta display control unit 32 performs a comparison of the valuta balance and the valuta threshold value, and makes a decision as to whether or not the valuta balance is less than or equal to the valuta threshold value. If this decision is affirmative, then it issues a command to display the fact that the valuta balance has becomes less than or equal to the valuta threshold value, and to display the valuta balance and a query as to whether or not to make a purchase of additional valuta; and the display device 13 performs display to that effect. Next, the user responds to the display of this query as to whether or not to make a purchase of additional valuta, and, if he has commanded a purchase of additional "valuta", then the valuta addition unit 34 of the valuta management application 31 communicates with the valuta server 42 via the transceiving unit 22 and so on, and purchases "valuta".

Accordingly, in this embodiment, the user of the portable telephone 10 is able to confirm that the "valuta", which is the value information that is stored, is in the predetermined range, i.e. is less than or equal to the valuta threshold value, so that it is possible to enhance the convenience for the user.

Furthermore in this embodiment, since it is possible to perform the setting of the valuta threshold value, which is the setting of the predetermined range, in advance by using the valuta management application 31, accordingly it is possible for the user or the like to perform the setting of the necessary predetermined range, so that the convenience can be enhanced.

Furthermore, in this embodiment, since the predetermined range is made to be less than or equal to the valuta threshold value, accordingly it is possible to output to the user the fact that the "valuta", which is the balance of the prepaid type voucher, has become low, so that the user is able to have the chance of making an additional purchase of "valuta", or the like; and accordingly it is possible to enhance the convenience.

Furthermore in this embodiment, since the display device 13 is used as the output device, accordingly the user is able simply to recognize, from the information which is displayed upon the display device 13, the fact that "valuta", which is the value information, is within said predetermined range.

Furthermore in this embodiment, since, apart from the display upon the display device 13 to the effect that the valuta balance has become less than or equal to the valuta threshold value and so on, also a display is made of a query as to whether or not to make an additional purchase of "valuta", and since moreover it is possible to make an additional purchase of "valuta", accordingly, if this value information is within the predetermined range, when the user wishes to make a change to this value information, he can make a change to this value information without any complicated actuation being required.

Furthermore in this embodiment, since it is arranged to make an additional purchase of "valuta" via a mobile communication network by using wireless communication, accordingly, if the value information is within the predetermined range, the user is able to make a change to the value information on the spot.

Furthermore in this embodiment, since the confirmation of the fact that the value information is within the predetermined range is applicable to prepaid type vouchers which are implemented by the function of the IC card of the portable telephone 10, accordingly it is possible to enhance the convenience.

Note that it should be understood that although, in the embodiment described above, the IC card function section 23 only notifies the fact that a valuta transaction has occurred, it would also be acceptable to arrange to notify the valuta balance or the like as well, at the same time. Furthermore although the valuta threshold value is stored, and the processing for valuta checking is performed, by the valuta display control unit 32, it would also be acceptable to arrange for the valuta threshold value to be stored, and the processing for valuta checking to be performed, by the valuta management unit 35 of the IC card function section 23.

Furthermore although, in the embodiment described above, it was arranged for the valuta threshold value, which determines the predetermined range, to be set by the user, it would also be acceptable to arrange for it to be set in advance upon shipment of the portable telephone, or the like.

Furthermore although, in the embodiment described above, it was arranged to start the valuta management application 31 when making an additional purchase of "valuta", it would also be acceptable to arrange for the purchase of "valuta" to be performed by a function which can be used at any time.

Furthermore although, in the embodiment described above, it was arranged for the output to be a character display upon the display device 13, it would also be acceptable to arrange for it to be some other output, such as one performed by a light, by a sound, by vibration, or by icon display upon the display device 13 or the like; and it would also be acceptable to arrange for it to be an output performed via a combination of these.

Furthermore although, in the embodiment described above, it was arranged for the value information to be a balance obtained by a prepaid type voucher, it could also be electronic money, or it could also be information such as points in a so called points system, which are acquired when purchasing goods or utilizing services, and which can be allocated as all or a part of the payment when purchasing goods or utilizing services. In such a points system, said predetermined range might be made to be that "the number of points is greater than or equal to a predetermined numerical value", and it might be arranged to perform output when points have thus been accumulated.

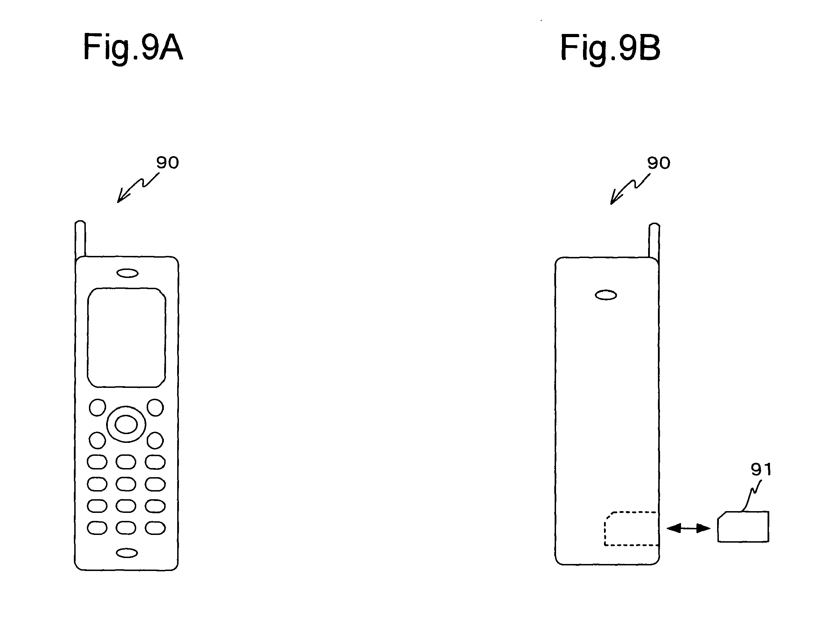

Furthermore although, in the embodiment described above, the IC card function was arranged to be of a type which is housed internally to the portable telephone, it would also be acceptable, as with the mobile communication terminal 90 shown in elevation view and in rear view in Figs. 9(A) and 9(B) respectively, to arrange to incorporate the IC card function in the mobile communication terminal by fitting a detachable IC card 91 to the mobile communication terminal 90.

Furthermore although, in the embodiment described above, a portable telephone was used as the mobile communication terminal, it would also be acceptable for it to be some other type of mobile communication device.

### Industrial Applicability

As explained above, the value information output method and the mobile communication terminal of the present invention can be applied to a mobile communication terminal which is endowed with a function of performing transactions using stored value information.

## Claims

1. A value information output method for a mobile communication terminal which is endowed with a function of performing a transaction using stored value information, comprising:
a value information transaction process of performing a transaction accompanied by change of said value information; and
a value information output process of, if in said value information transaction process it has transpired that the content of said value information has become within a predetermined range, performing output upon an output device of said mobile communication terminal to the effect that said value information is within said predetermined range.

2. A value information output method as described in Claim 1, **characterized by** further comprising, before said value information transaction process, a value information range setting process of setting said predetermined range.

3. A value information output method as described in Claim 1, **characterized in that** said value information is expressed by a numerical value, and said predetermined range is less than or equal to a predetermined numerical value.

4. A value information output method as described in Claim 1, **characterized in that** said output device is a display device of said mobile communication terminal.

5. A value information output method as described in Claim 1, **characterized in that**, in said value information output process, output is further performed urging the user to change the content of said value information; and further comprising
a value information content change process of performing processing to change the content of said value information if, according to said output urging the content of said value information to be changed, a command has been inputted for said change.

6. A value information output method as described in Claim 5, **characterized in that** said value information content change process is performed using wireless communication via a mobile communication network.

7. A mobile communication terminal, comprising:
a value information transaction function means which performs a transaction accompanied by change of stored value information; and
a value information output means which, if it has transpired that the content of said value information has become within a predetermined range, performs output upon an output device of said mobile communication terminal to the effect that said value information is within said predetermined range.

8. A mobile communication terminal as described in Claim 7, **characterized in that** said value information output means further performs output urging the user to change the content of said value information; and by further comprising a value information content change means which performs processing to change the content of said value information.

9. A mobile communication terminal as described in Claim 7, **characterized in that** said value information transaction function means is endowed with the function of an IC card for performing non contact type communication, i.e. proximity type wireless communication, and said transaction accompanied by change of said value information is performed by said non contact type communication.
